# EUROPÄISCHE PATENTANMELDUNG

(11) **EP 2 860 856 A1**
(43) Veröffentlichungstag der Anmeldung: **15.04.2015**
(21) Anmeldenummer: 13188454.6
(22) Anmeldetag: 14.10.2013
(51) Int. Cl.: H02K 9/193, H02K 9/20

(54) **Verfahren zum Kühlen einer rotierenden elektrischen Maschine**

(71) Anmelder: Siemens Aktiengesellschaft, 80333 München (DE)
(72) Erfinder: Grau Sorarrain, Esteban, 40215 Düsseldorf (DE); Jäkel, Christian, 45468 Mülheim an der Ruhr (DE); Koebe, Mario, 45478 Mülheim an der Ruhr (DE); Kowalski, Matthias, 45470 Mülheim an der Ruhr (DE); Lehmann, Christoph, 47506 Neukirchen-Vluyn (DE); Mashkin, Andrey, 50672 Köln (DE); Plotnikova, Olga, 42369 Wuppertal (DE); Schild, Carolin, 45478 Mülheim an der Ruhr (DE)

(57) **Zusammenfassung**

Die Erfindung betrifft ein Verfahren zum Kühlen einer rotierenden elektrischen Maschine, insbesondere eines Turbogenerators oder Elektromotors, unter Verwendung eines in einem fluidtechnisch an die rotierende elektrische Maschine angeschlossenen Kühlsystem zirkulierenden, gasförmigen Kühlfluids, wobei zumindest ein Teil der rotierenden elektrischen Maschine von dem Kühlfluid durchströmt wird, dadurch gekennzeichnet, dass dem Kühlfluid wenigstens eine hydrophobe Flüssigkeit zugeführt wird.

## Beschreibung

Die Erfindung betrifft ein Verfahren zum Kühlen einer rotierenden elektrischen Maschine, insbesondere eines Turbogenerators oder Elektromotors, unter Verwendung eines in einem fluidtechnisch an die rotierende elektrische Maschine angeschlossenen Kühlsystem zirkulierenden, gasförmigen Kühlfluids, wobei zumindest ein Teil der rotierenden elektrischen Maschine von dem Kühlfluid durchströmt wird.

Des Weiteren betrifft die Erfindung ein Kühlsystem zum Kühlen einer fluidtechnisch an das Kühlsystem angeschlossenen rotierenden elektrischen Maschine, insbesondere eines Turbogenerators oder Elektromotors, aufweisend ein in dem Kühlsystem zirkulierendes, gasförmiges Kühlfluid, mit dem zumindest ein Teil der rotierenden elektrischen Maschine durchströmbar ist.

Rotierende elektrische Maschinen in Form von Turbogeneratoren werden in Kraftwerken zum Erzeugen von elektrischer Energie eingesetzt. Hierzu ist ein Turbogenerator mechanisch mit wenigstens einer Gasturbine und/oder Dampfturbine gekoppelt, wobei der Turbogenerator zusammen mit der Gasturbine einen Turbosatz bildet.

Während des Betriebs einer rotierenden elektrischen Maschine wird zwangsläufig Wärme in einem Stator und/oder einem Rotor der rotierenden elektrischen Maschine erzeugt. Diese Verlustwärme entsteht durch Umwandlung von mechanischer Energie in elektrische Energie, oder umgekehrt.

Die in einem Stator und/oder einem Rotor einer rotierenden elektrischen Maschine erzeugte Wärme muss zu einem sicheren und effizienten Betrieb der rotierenden elektrischen Maschine aus der rotierenden elektrischen Maschine abgeführt werden. Dies ist insbesondere deshalb erforderlich, da an dem Stator und/oder dem Rotor der rotierenden elektrischen Maschine üblicherweise elektrische Isolierungen vorhanden sind, welche ab Erreichen einer bestimmten Temperatur in ihrer Funktion und/oder Lebensdauer beeinträchtigt werden würden, was insbesondere zu schädigenden elektrischen Kurzschlüssen führen könnte. Je mehr Wärme aus einer rotierenden elektrischen Maschine abgeführt wird, desto höher kann die rotierende elektrische Maschine ausgelastet werden, was mit einer entsprechenden Leistungssteigerung einhergeht.

Herkömmlich wird zur Wärmeabführung aus einer rotierenden elektrischen Maschine bzw. zur Kühlung des Stators, insbesondere dessen Statorwickelkopfes, und/oder des Rotors der rotierenden elektrischen Maschine ein gasförmiges Kühlfluid in Form von Umgebungsluft, Wasserstoff oder einem Wasserstoff enthaltenden Gemisch verwendet. Das Kühlfluid wird in der Regel an beiden axialen Enden der rotierenden elektrischen Maschine axial zwischen den Stator und den Rotor eingeleitet und in einem mittleren Bereich der rotierenden elektrischen Maschine radial aus der rotierenden elektrischen Maschine abgeführt.

Zur Durchführung der beschriebenen Wärmeabführung kann die rotierende elektrische Maschine fluidtechnisch an ein Kühlsystem angeschlossen sein, in dem das gasförmige Kühlfluid zirkuliert. Ein solches Kühlsystem weist herkömmlich unter anderem eine Fluidpumpe auf, mit der die Kühlfluidzirkulation erzeugbar ist. Des Weiteren weist ein solches Kühlsystem wenigstens einen Wärmetauscher auf, über den in dem Kühlfluid enthaltene Wärme aus dem Kühlfluid abgeführt und einer weiteren Verwendung zugänglich gemacht werden kann.

Die Effizienz zur Kühlung einer rotierenden elektrischen Maschine hängt folglich insbesondere von der Wärmekapazität des jeweilig zur Kühlung verwendeten Kühlfluids und der Strömungsgeschwindigkeit des Kühlfluids ab.

Aufgabe der Erfindung ist es, die Auslastbarkeit einer rotierenden elektrischen Maschine zu erhöhen und einen sicheren Betrieb der rotierenden elektrischen Maschine zu gewährleisten.

Nach dem erfindungsgemäßen Verfahren zum Kühlen einer rotierenden elektrischen Maschine, insbesondere eines Turbogenerators oder Elektromotors, unter Verwendung eines in einem fluidtechnisch an die rotierende elektrische Maschine angeschlossenen Kühlsystem zirkulierenden, gasförmigen Kühlfluids wird zumindest ein Teil der rotierenden elektrischen Maschine von dem Kühlfluid durchströmt und dem Kühlfluid wenigstens eine hydrophobe Flüssigkeit zugeführt.

Durch die während eines Betriebs einer zu kühlenden rotierenden elektrischen Maschine auftretende Wärme wird die erfindungsgemäß dem gasförmigen Kühlfluid zugeführte hydrophobe Flüssigkeit verdampft. Die zum Verdampfen der hydrophoben Flüssigkeit erforderliche Verdampfungswärme kann somit von der rotierenden elektrischen Maschine über das hydrophobe Kühlfluid als Wärmeträger abgeführt werden. Hiermit ist eine höhere Kühleffektivität bzw. eine verbesserte Kühlung der rotierenden elektrischen Maschine realisierbar, was wiederum die Auslastbarkeit einer rotierenden elektrischen Maschine erhöht. Gleichzeitig gewährleistet diese verbesserte Kühlung einer rotierenden elektrischen Maschine eine Erhöhung der Leistung und/oder der Lebensdauer der rotierenden elektrischen Maschine. Durch die Erhöhung der Auslastbarkeit einer rotierenden elektrischen Maschine kann eine rotierende elektrische Maschine verwendet werden, der eine höhere Leistungsdichte aufweist und der insbesondere bei gleicher Leistung kompakter und kleiner ausgebildet ist.

Die hydrophobe Flüssigkeit wird bevorzugt in das Kühlfluid eingesprüht. Durch dieses Einsprühen findet eine Zerstäubung der hydrophoben Flüssigkeit statt, um die hydrophobe Flüssigkeit möglichst gleichmäßig in dem Kühlfluid verteilen zu können.

Bevorzugt wird die hydrophobe Flüssigkeit innerhalb des Kühlsystems als Rieselfilm auf wenigstens einen Teil eines zu kühlendes Bauteils der rotierenden elektrischen Maschine aufgebracht. Dies kann alternativ oder zusätzlich zu der zuvor genannten Ausgestaltung des Verfahrens vorgesehen sein. Hierdurch wird zusätzlich die beim Verdampfen der auf das Bauteil aufgebrachten hydrophoben Flüssigkeit auftretende Verdunstungskühlung zum Kühlen der rotierenden elektrischen Maschine verwendet, was die Kühleffektivität weiter erhöht. Ein entsprechender Rieselfilm kann auch auf zwei oder mehrere Bauteile der rotierenden elektrischen Maschine aufgebracht werden.

Die hydrophobe Flüssigkeit wird bevorzugt dem Kühlfluid gezielt in wenigstens einem vorgebbaren Bereich der rotierenden elektrischen Maschine zugeführt. Hierdurch können bestimmte Bereiche einer rotierenden elektrischen Maschine, in denen besonders hohe Wärmebelastungen auftreten und welche auch als Hot-Spots bezeichnet werden, gezielt verstärkt gekühlt werden. Beispielsweise kann in solchen Bereichen der rotierenden elektrischen Maschine dem Kühlfluid eine größere Menge an hydrophober Flüssigkeit pro Zeiteinheit zugeführt werden. Es kann auch vorgesehen sein, dass dem Kühlfluid ausschließlich in den Bereichen der Hot-Spots der rotierenden elektrischen Maschine hydrophobe Flüssigkeit zugeführt wird.

Bevorzugt wird die hydrophobe Flüssigkeit aus dem Kühlfluid rückgewonnen und erneut dem Kühlfluid zugeführt. Die Rückgewinnung der hydrophoben Flüssigkeit aus dem Kühlfluid kann nach erfolgter Kühlung der rotierenden elektrischen Maschine und der damit verbundenen Verdampfung der hydrophoben Flüssigkeit durch Auskondensierung aus dem Kühlfluid erfolgen. Durch die Rückgewinnung und Wiederverwendung der hydrophoben Flüssigkeit ist das Verfahren kostengünstig durchführbar.

Als hydrophobe Flüssigkeit wird bevorzugt ein Silikonöl verwendet. Das Silikonöl kann beispielsweise auf Basis eines Polydimethylsiloxans hergestellt sein. Hydrophobe Flüssigkeiten in Form von Ölen bzw. Ölgemischen sind wegen ihrer hohen Verdampfungstemperatur besonders gut zur Durchführung des erfindungsgemäßen Verfahrens geeignet.

Das erfindungsgemäße Kühlsystem zum Kühlen einer fluidtechnisch an das Kühlsystem angeschlossenen rotierenden elektrischen Maschine, insbesondere eines Turbogenerators oder Elektromotors, umfasst ein in dem Kühlsystem zirkulierendes, gasförmiges Kühlfluid, mit dem zumindest ein Teil der rotierenden elektrischen Maschine durchströmbar ist, wobei das Kühlfluid wenigstens eine hydrophobe Flüssigkeit aufweist.

Mit diesem Kühlsystem sind die oben mit Bezug auf das erfindungsgemäße Verfahren genannten Vorteile entsprechend verbunden.

Bevorzugt weist das Kühlsystem wenigstens eine Einsprüheinrichtung zum Einsprühen der hydrophoben Flüssigkeit in das Kühlfluid auf. Die Einsprüheinrichtung kann eine oder mehrere Einsprühdüsen aufweisen. Die Einsprühdüsen können an bestimmten Bereichen der rotierenden elektrischen Maschine angeordnet sein, in denen besonders hohe Wärmebelastungen auftreten.

Das Kühlsystem weist bevorzugt wenigstens eine Aufbringeinrichtung zum Aufbringen der hydrophoben Flüssigkeit innerhalb des Kühlsystems als Rieselfilm auf wenigstens ein zu kühlendes Bauteil der rotierenden elektrischen Maschine auf. Die Aufbringeinrichtung kann eine oder mehrere Aufbringdüsen aufweisen. Die Aufbringdüsen können an bestimmten Bereichen der rotierenden elektrischen Maschine angeordnet sein, in denen besonders hohe Wärmebelastungen auftreten.

Bevorzugt weist das Kühlsystem wenigstens eine Rückgewinnungseinrichtung zum Rückgewinnen der hydrophoben Flüssigkeit aus dem Kühlfluid auf. Die Rückgewinnungseinrichtung kann wenigstens einen Kondensator und zumindest einen Flüssigkeitsabscheider aufweisen.

Die Rückgewinnungseinrichtung ist bevorzugt fluidtechnisch mit der Einsprüheinrichtung und/oder der Aufbringeinrichtung verbunden. Hierdurch kann eine kostensparende Wiederverwendung der hydrophoben Flüssigkeit erfolgen, indem die von der Rückgewinnungseinrichtung rückgewonnene hydrophobe Flüssigkeit der Einsprüheinrichtung bzw. der Aufbringeinrichtung zugeleitet wird.

Im Folgenden wird eine bevorzugte Ausführungsform des erfindungsgemäßen Kühlsystems anhand der beigefügten schematischen Zeichnung erläutert. Es zeigt:

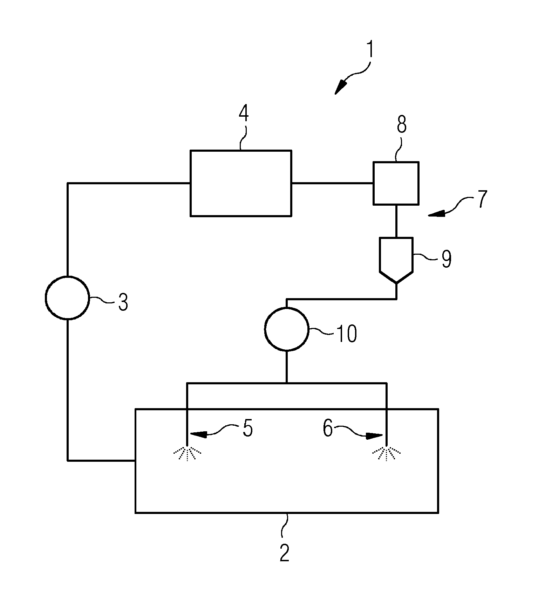

Fig. 1 eine Darstellung eines Ausführungsbeispiels für ein erfindungsgemäßes Kühlsystem.

Figur 1 zeigt eine Darstellung eines Ausführungsbeispiels für ein erfindungsgemäßes Kühlsystem 1 zum Kühlen einer fluidtechnisch an das Kühlsystem 1 angeschlossenen rotierenden elektrischen Maschine 2 in Form eines Turbogenerators. Das Kühlsystem 1 umfasst ein in dem Kühlsystem 1 zirkulierendes, gasförmiges, nicht näher dargestelltes Kühlfluid, mit dem zumindest ein Teil der rotierenden elektrischen Maschine 2 durchströmbar ist und das wenigstens eine hydrophobe Flüssigkeit in Form eines Silikonöls aufweist. Das Kühlsystem 1 weist des Weiteren eine Pumpe 3 zur Zirkulierung des Kühlfluids und einen Wärmetauscher 4 zur Abgabe der in dem Kühlfluid enthaltenen Wärme auf.

Das Kühlsystem 1 umfasst eine Einsprüheinrichtung 5 zum Einsprühen der hydrophoben Flüssigkeit in das Kühlfluid. Des Weiteren umfasst das Kühlsystem 1 eine Aufbringeinrichtung 6 zum Aufbringen der hydrophoben Flüssigkeit innerhalb des Kühlsystems 1 als Rieselfilm auf wenigstens ein nicht näher dargestelltes, zu kühlendes Bauteil der rotierenden elektrischen Maschine 2.

Ferner umfasst das Kühlsystem 1 eine Rückgewinnungseinrichtung 7 zum Rückgewinnen der hydrophoben Flüssigkeit aus dem Kühlfluid. Die Rückgewinnungseinrichtung 7 ist fluidtechnisch mit der Einsprüheinrichtung 5 und der Aufbringeinrichtung 6 verbunden. Die Rückgewinnungseinrichtung 7 umfasst einen Kondensator 8 und einen dem Kondensator 7 nachgeschalteten Flüssigkeitsabscheider 9. Zwischen der Rückgewinnungseinrichtung 7 einerseits und der Einsprüheinrichtung 5 und der Aufbringeinrichtung 6 andererseits ist eine weitere Pumpe 10 angeordnet, welche zum Zuführen der hydrophoben Flüssigkeit in das Kühlfluid angesteuert wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Kühlen einer rotierenden elektrischen Maschine (2), insbesondere eines Turbogenerators oder Elektromotors, unter Verwendung eines in einem fluidtechnisch an die rotierende elektrische Maschine (2) angeschlossenen Kühlsystem (1) zirkulierenden, gasförmigen Kühlfluids, wobei zumindest ein Teil der rotierenden elektrischen Maschine (2) von dem Kühlfluid durchströmt wird, **dadurch gekennzeichnet, dass** dem Kühlfluid wenigstens eine hydrophobe Flüssigkeit zugeführt wird.

2. Verfahren gemäß Anspruch 1,
wobei die hydrophobe Flüssigkeit in das Kühlfluid eingesprüht wird.

3. Verfahren gemäß Anspruch 1 oder 2,
wobei die hydrophobe Flüssigkeit innerhalb des Kühlsystems als Rieselfilm auf wenigstens einen Teil eines zu kühlendes Bauteils der rotierenden elektrischen Maschine (2) aufgebracht wird.

4. Verfahren gemäß einem der Ansprüche 1 bis 3,
wobei die hydrophobe Flüssigkeit dem Kühlfluid gezielt in wenigstens einem vorgebbaren Bereich der rotierenden elektrischen Maschine (2) zugeführt wird.

5. Verfahren gemäß einem der Ansprüche 1 bis 4,
wobei die hydrophobe Flüssigkeit aus dem Kühlfluid rückgewonnen und erneut dem Kühlfluid zugeführt wird.

6. Verfahren gemäß einem der Ansprüche 1 bis 5,
wobei als hydrophobe Flüssigkeit ein Silikonöl verwendet wird.

7. Kühlsystem (1) zum Kühlen einer fluidtechnisch an das Kühlsystem (1) angeschlossenen rotierenden elektrischen Maschine (2), insbesondere eines Turbogenerators oder Elektromotors, aufweisend ein in dem Kühlsystem (2) zirkulierendes, gasförmiges Kühlfluid, mit dem zumindest ein Teil der rotierenden elektrischen Maschine (2) durchströmbar ist, **dadurch gekennzeichnet, dass** das Kühlfluid wenigstens eine hydrophobe Flüssigkeit aufweist.

8. Kühlsystem (1) gemäß Anspruch 7,
aufweisend wenigstens eine Einsprüheinrichtung (5) zum Einsprühen der hydrophoben Flüssigkeit in das Kühlfluid.

9. Kühlsystem (1) gemäß Anspruch 7 oder 8,
aufweisend wenigstens eine Aufbringeinrichtung (6) zum Aufbringen der hydrophoben Flüssigkeit innerhalb des Kühlsystems (1) als Rieselfilm auf wenigstens ein zu kühlendes Bauteil der rotierenden elektrischen Maschine (2).

10. Kühlsystem (1) gemäß einem der Ansprüche 7 bis 9,
aufweisend wenigstens eine Rückgewinnungseinrichtung (7) zum Rückgewinnen der hydrophoben Flüssigkeit aus dem Kühlfluid.

11. Kühlsystem (1) gemäß Anspruch 10,
wobei die Rückgewinnungseinrichtung (7) fluidtechnisch mit der Einsprüheinrichtung (5) und/oder der Aufbringeinrichtung (6) verbunden ist.
